# EUROPÄISCHE PATENTSCHRIFT

(11) **EP 2 125 421 B1**
(45) Veröffentlichungstag und Bekanntmachung des Hinweises auf die Patenterteilung: **29.09.2010**
(21) Anmeldenummer: 08715962.0
(22) Anmeldetag: 22.02.2008
(51) Int. Cl.: B60K 28/04, F02N 11/08

(54) **VERFAHREN UND ANLASSSTEUERVORRICHTUNG ZUR STEUERUNG EINES AUTOMATISCHEN ANSCHALTVORGANGS EINER ANTRIEBSEINHEIT**
METHOD AND START CONTROL DEVICE FOR CONTROLLING AN AUTOMATIC START-UP PROCESS OF A DRIVE UNIT
PROCÉDÉ ET DISPOSITIF DE COMMANDE DE MISE EN MARCHE POUR LA COMMANDE D'UN PROCESSUS DE DÉMARRAGE AUTOMATIQUE D'UNE UNITÉ D'ENTRAÎNEMENT

(30) Priorität: 28.02.2007 DE 102007009856
(43) Veröffentlichungstag der Anmeldung: 02.12.2009
(73) Patentinhaber: Bayerische Motoren Werke Aktiengesellschaft, 80809 München (DE)
(72) Erfinder: ABENDROTH, Dirk, 80337 München (DE); STRÄHLE, Peter, 85586 Poing (DE)
(86) Internationale Anmeldenummer: PCT/EP2008/001411
(87) Internationale Veröffentlichungsnummer: WO 2008/104331

(56) Entgegenhaltungen:
- WO-A-2006/128900
- DE-A1- 10 251 765
- DE-C1- 10 211 466

## Beschreibung

Die Erfindung bezieht sich auf ein Verfahren zur Steuerung eines automatischen Anschaltvorgangs einer Antriebseinheit nach dem Oberbegriff des Anspruchs 1 und auf eine entsprechende Anlasssteuervorrichtung nach dem Oberbegriff des Anspruchs 8.

Um Kraftstoffverbrauch und Schadstoffemissionen zu reduzieren, werden derzeit Verfahren und Systeme entwickelt und zum Teil auch bereits eingesetzt, welche eine Start-Stopp-Funktion enthalten, die die als Brennkraftmaschine ausgestaltete Antriebseinheit eines Kraftfahrzeugs unter bestimmten Voraussetzungen bzw. bei Vorliegen vorgegebener Abschaltbedingungen automatisch abschaltet und bei Vorliegen vorgegebener Anschaltbedingungen automatisch wieder anschaltet. Derartige Verfahren und Systeme sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

So ist aus der DE 101 61 343 A1 eine automatische Stopp- und Anlasssteuervorrichtung für einen Verbrennungsmotor bekannt, wobei die Steuervorrichtung entsprechende Maßnahmen zum Abschalten des Verbrennungsmotors vornimmt, wenn alle genannten Abschaltbedingungen erfüllt sind. Sind vorgegebene Anschaltmaßnahmen erfüllt, nimmt die Steuervorrichtung entsprechende Maßnahmen zum automatischen Anschalten des Verbrennungsmotors vor.

Weiter offenbart die DE 102 11 463 B3 ein Verfahren zum automatischen Abschalten und Anschalten eines Verbrennungsmotors, wobei in einer Ausgestaltung des Verfahrens ein automatischer Anschaltvorgang eines automatisch abgeschalteten Verbrennungsmotors nur durchgeführt wird, wenn zusätzlich zu den erfüllten (sonstigen) Anschaltbedingen alle Fahrzeugtüren geschlossen sind. Nach dem Öffnen einer der vorderen Fahrzeugtüren, wird kein automatischer Anschaltvorgang eingeleitet. Diese Bedingung ist notwendig, um keinen automatischen Anschaltvorgang einzuleiten, wenn die Möglichkeit besteht, dass der Fahrer das Fahrzeug verlassen wird oder verlassen hat.

Die DE 10211466 offenbart ein Verfahren nach dem Oberbegriff des Anspruchs 1 bzw. eine Anlasssteuervorrichtung nach dem Oberbegriff des Anspruchs 8.

Wird die Fahrerabwesenheit bspw. durch das Öffnen der Fahrertür erkannt bzw. vermutet, so ist es trotzdem denkbar, dass der Fahrer nach dem Schließen der Tür im Fahrzeug anwesend ist und das Fahrzeug kontrollieren kann und will. Da nun durch das Öffnen der Tür aber doch eine Fahrerabwesenheit erkannt bzw. vermutet wird, obwohl der Fahrer im Fahrzeug sitzt, könnte es unter gewissen Umständen, bspw. bei einer drohenden Gefahrensituation sinnvoll sein, die Antriebseinheit trotz erkannter Fahrerabwesenheit automatisch anzuschalten. Für den Fall, dass der Fahrer nun doch im Fahrzeug sitzt, kann er Handlungen vornehmen, die bei augeschalteter Antriebseinheit nicht oder nur schwer möglich wären und die Gefahr dadurch ggf. abwenden. Für den Fall, dass der Fahrer tatsächlich nicht im Fahrzeug sitzt, kann der Fahrer zwar keine entsprechenden Handlungen vornehmen, zusätzliche Gefahren entstehen dadurch aber auch nicht.

Aufgabe der Erfindung ist es, ein Verfahren und eine Vorrichtung zur Steuerung eines automatischen Anschaltvorgangs anzugeben, bei dem bei Vorliegen bestimmter Bedingungen ein automatischer Anschaltvorgang eingeleitet wird, selbst wenn nicht alle Anschaltbedingungen erfüllt sind.

Diese Aufgabe wird durch ein Verfahren nach Patentanspruch 1 und eine Anlasssteuervorrichtung nach Patentanspruch 8 gelöst. Vorteilhafte Weiterbildungen ergeben sich aus den abhängigen Ansprüchen.

Grundgedanke der Erfindung ist, dass sich das Fahrzeug in Situationen befinden kann, in denen trotz erkannter bzw. vermuteter Fahrerabwesenheit ein automatischer Anschaltvorgang eingeleitet werden sollte. Würde bspw. das Kraftfahrzeug mit abgeschalteter Antriebseinheit augrund der Straßenneigung losrollen, ist das Fahrzeug mit abgeschalteter Antriebseinheit sehr schwer kontrollierbar, da die Brems- und Lenkunterstützung durch die Brennkraftmaschine fehlen oder eingeschränkt sind. Würde der Fahrer trotz erkannter bzw. vermuteter Fahrerabwesenheit im Fahrzeug sitzen, könnte er bei angeschalteter Antriebseinheit relativ leicht Handlungen vornehmen und das Fahrzeug wieder stoppen oder aufgrund von Lenkbewegungen Hindernissen ausweichen. Sitzt der Fahrer tatsächlich nicht im Fahrzeug, würde das Fahrzeug unabhängig davon, ob die Antriebseinheit angeschaltet ist oder nicht, entsprechend den äußeren Gegebenheiten ungelenkt weiterrollen.

Aufgrund dieser Tatschache zeichnet sich das erfindungsgemäße Verfahren zur Steuerung eines automatischen Anschaltvorgangs einer automatisch abgeschalteten Antriebseinheit eines Kraftfahrzeugs, wobei prinzipiell kein Anschaltvorgang der Antriebseinheit vorgenommen wird, wenn eine Fahrerabwesenheit erkannt bzw. vermutet wird, dadurch aus, dass die Antriebseinheit auch bei erkannter bzw. vermuteter Fahrerabwesenheit automatisch gestartet wird, wenn die Geschwindigkeit des Kraftfahrzeugs größer als eine vorgegebene Grenzgeschwindigkeit ist und alle übrigen Anschaltbedingungen erfüllt sind. In diesem Fall wird die Kontrollierbarkeit des Fahrzeugs höher priorisiert als eine vermutete Fahrerabwesenheit. Wie bereits oben erwähnt, könnte durch ein automatisches Anschalten der Antriebseinheit eine Gefahrensituation abgewendet werden, falls der Fahrer trotz systemseitig erkannter Fahrerabwesenheit im Fahrzeug sitzt.

Eine Fahrerabwesenheitserkennung kann durch eine Auswertung verschiedener Signale erfolgen. Vorteilhafterweise wird eine Fahrerabwesenheit durch Auswertung eines Fahrer-Türkontaktsignals und/oder eines Fahrer-Gurtschlosssignals und/oder eines Fahrersitzbelegungserkennungssignals und/oder eines Fußpedalbetätigungssignals und/oder eines Innenraumkamerasignals erkannt. Die genannten Signale können einzeln oder in Kombination zur Fahrerabwesenheitserkennung verwendet werden. Werden die Signale in Kombination zur Fahrerabwesenheitserkennung ausgewertet, so kann eine Abwesenheit bspw. dann erkannt werden, wenn zwei von drei Signalen derart vorliegen, dass sie eine Fahrerabwesenheit erkennen. Werden bspw. die Fahrer-Türkontaktsignale, die Fahrer-Gurtschlosssignale und die Fahrer-Sitzbelegungserkennungssignale ausgewertet, so kann eine Fahrerabwesenheit erkannt bzw. vermutet werden, wenn die Fahrertür und das Gurtschloss offen sind, die Fahrer-Sitzbelegungserkennung aber eine Sitzbelegung erkennt. Eine Sitzbelegungserkennungseinrichtung kann bspw. als Sitzbelegungsmatte ausgestaltet sein.

In bestimmten Situationen kann es jedoch sinnvoll sein, einen derartigen automatischen Anschaltvorgang zu verhindern. Die Verhinderung kann entweder manuell und/oder systemsseitig erfolgen. Vorteilhafterweise wird ein automatisches Anschalten der Antriebseinheit bei erkannter Fahrerabwesenheit verhindert, wenn der Fahrer ein dafür vorgesehenes Bedienelement betätigt und/oder ein Abschleppen erkannt wird.

Wird ein Kraftschluss zwischen Antriebseinheit und Antriebsrädern erkannt, sollte ebenfalls kein automatischer Start der Antriebseinheit vorgenommen werden, da dies zu einer erhöhten Gefahrensituation führen könnte, wenn der Fahrer tatsächlich nicht im Kraftfahrzeug ist. Ein erkannter Kraftschluss wird somit noch höher priorisiert als eine vermutete Fahrerabwesenheit bei einem rollenden Fahrzeug.

Damit die Antriebseinheit bei Schleppbetrieb in der Waschanlage nicht ungewollt automatisch angeschaltet wird, sollte dies ebenfalls verhindert werden. Dazu gibt es verschiedene Möglichkeiten. In einer ersten Alternative kann die vorgegebene Grenzgeschwindigkeit so hoch gewählt werden, dass sie beim Schleppbetrieb in der Waschanlage nicht erreicht wird. In einer zweiten Alternative kann ein Waschstraßenmodus durch Überprüfung der Einzelraddrehzahlen erkannt werden. Nur wenn alle Raddrehzahlen eine vorgegebene Grenzgeschwindigkeit überschreiten, sollte trotz erkannter Fahrerabwesenheit die automatisch abgeschaltete Antriebseinheit wieder automatisch gestartet werden.

Entsprechend dem erfindungsgemäßen Verfahren zeichnet sich die erfindungsgemäße Anlasssteuervorrichtung zur Steuerung eines automatischen Anschaltvorgangs einer automatisch abgeschalteten Antriebseinheit eines Kraftfahrzeugs, die prinzipiell keinen automatischen Anschaltvorgang einleitet, wenn eine Fahrerabwesenheit erkannt bzw. vermutet wird, dadurch aus, dass die Anlasssteuerung auch bei erkannter.bzw. vermuteter Fahrerabwesenheit einen automatischen Anschaltvorgang einleitet, wenn die Geschwindigkeit des Kraftfahrzeugs größer als eine vorgegebene Grenzgeschwindigkeit ist. Die vorteilhaften Ausgestaltungen des erfindungsgemäßen Verfahrens gelten analog für die erfindungsgemäße Anlasssteuervorrichtung.

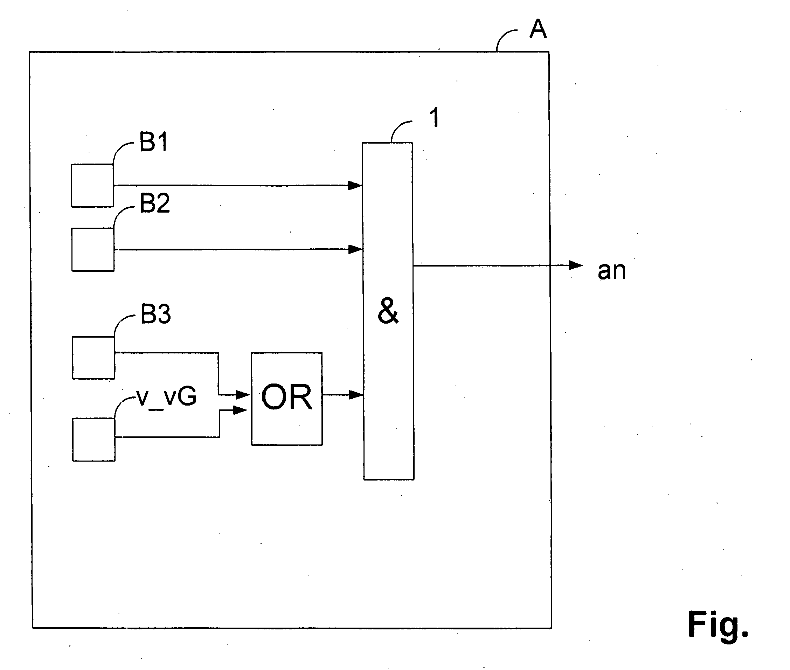

Das erfindungsgemäße Verfahren wird nun anhand eines Ausführungsbeispiels näher erläutert. Dabei zeigt die einzige Figur eine erfindungsgemäße Anlasssteuervorrichtung zur Steuerung eines automatischen Anschaltvorgangs einer Antriebseinheit in einem Kraftfahrzeug.

Die hier dargestellte Anlasssteuervorrichtung A zur Steuerung eines automatischen Anschaltvorgangs einer Antriebseinheit eines Kraftfahrzeugs wertet die verschieden Anschaltbedingungen B1, B2 und B3 und eine weitere Bedingung v_vG aus. Die Anschaltbedingung B3 besteht darin, dass keine Fahrerabwesenheit vorliegen darf, d. h. sie ist erfüllt, wenn keine Fahrerabwesenheit erkannt wird. Die Bedingung v_vG ist erfüllt, wenn die aktuelle Geschwindigkeit des Kraftfahrzeugs bzw. die Geschwindigkeit aller Räder des Kraftfahrzeugs größer als eine vorgegebene Grenzgeschwindigkeit ist.

Damit ein automatischer Start vorgenommen werden kann, müssen prinzipiell alle Anschaltbedingungen B1, B2 und B3 erfüllt sein. Gemäß der Erfindung kann ein automatischer Anschaltvorgang auch bei Fahrerabwesenheitserkennung eingeleitet werden, wenn die Bedingung v_vG erfüllt ist.

In der OR-Verknüpfung wird festgestellt, ob zumindest eine der beiden Eingangsbedingungen, also entweder die Anschaltbedingung B3 oder die Bedingung v_vG erfüllt ist. Ist zumindest eine der beiden Bedingungen B3 oder v_vG erfüllt, und sind zusätzlich auch die beiden Anschaltbedingungen B1 und B2 erfüllt, was in einer UND-Einheit 1 überprüft wird, sendet die Anlasssteuervorrichtung A ein Startsignal an eine zum automatischen Anschalten einer hier nicht dargestellten Brennkraftmaschine geeigneten Starteinrichtung aus.

Die Erfindung bietet somit den Vorteil, dass die Kontrollierbarkeit des Kraftfahrzeugs bei rollendem Fahrzeug durch ein Starten der Antriebseinheit verbessert wird.

## Patentansprüche

1. Verfahren zur Steuerung eines automatischen Anschaltvorgangs einer Antriebseinheit eines Kraftfahrzeugs, wobei die Antriebseinheit automatisch angeschaltet wird (an), wenn alle vorgegebenen Anschaltbedingungen (B1, B2, B3) erfüllt sind (&), und wobei eine Anschaltbedingung (B3) darin besteht, dass keine Fahrerabwesenheit erkannt werden darf, **dadurch gekennzeichnet, dass** die Antriebseinheit auch bei erkannter Fahrerabwesenheit automatisch gestartet wird (an), wenn die Geschwindigkeit des Kraftfahrzeugs größer als eine vorgegebene Grenzgeschwindigkeit ist (v_vG) und die übrigen Anschaltbedingungen (B1, B2) erfüllt sind.

2. Verfahren nach Anspruch 1, **dadurch gekennzeichnet, dass** eine Fahrerabwesenheit durch Auswertung eines Fahrer-Türkontaktsignals und/oder eines Fahrer-Gurtschlosssignals und/oder eines Fahrer-Sitzbelegungserkennungssignals und/oder eines Fußpedalbetätigungssignals und/oder eines Kamerasignals erkannt wird.

3. Verfahren nach Anspruch 2, **dadurch gekennzeichnet, dass** bei mehreren Fahrerabwesenheitserkennungseinheiten eine Fahrerabwesenheit erkannt wird, wenn zumindest eine vorgegebene Anzahl der Fahrerabwesenheitserkennungseinheiten eine Fahrerabwesenheit erkannt haben.

4. Verfahren nach einem der vorangegangenen Ansprüche, **dadurch gekennzeichnet, dass** ein automatisches Anschalten der Antriebseinheit bei erkannter Fahrerabwesenheit verhindert werden kann.

5. Verfahren nach Anspruch 4, **dadurch gekennzeichnet, dass** ein automatisches Anschalten der Antriebseinheit bei erkannter Fahrerabwesenheit verhindert wird, wenn der Fahrer ein dafür vorgesehenes Bedienelement betätigt und/oder wenn ein Waschstraßenmodus erkannt wird und/oder wenn ein Abschleppen erkannt wird und/oder wenn ein Kraftschluss zwischen Antriebseinheit und Antriebsrädern erkannt wird.

6. Verfahren nach Anspruch 5, **dadurch gekennzeichnet, dass** der Waschstraßenmodus durch Auswertung der Einzelraddrehzahlen erkannt wird.

7. Verfahren nach Anspruch 6, **dadurch gekennzeichnet, dass** der Waschstraßenmodus durch eine derartige Auswertung der Einzelraddrehzahlen erkannt wird, wenn bei einem Rad oder bei allen Rädern, die hintereinander angeordnet sind, eine Einzelraddrehzahl ermittelt wird, die Null oder zumindest nahezu Null ist, und die Einzelraddrehzahl der übrigen Räder deutlich verschieden von Null ist.

8. Anlasssteuervorrichtung (A) zur Steuerung eines automatischen Anschaltvorgangs einer abgeschalteten Antriebseinheit eines Kraftfahrzeugs, wobei die Anlassteuerung (A) einen automatischen Anschaltvorgang einleitet (an), wenn alle vorgegebenen Anschaltbedingungen (B1, B2, B3) erfüllt sind (&1), und wobei eine Anschaltbedingung (B3) darin besteht, dass keine Fahrerabwesenheit erkannt werden darf, **dadurch gekennzeichnet, dass** die Anlassteuerung (A) auch bei erkannter Fahrerabwesenheit (!) einen automatischen Anschaltvorgang einleitet (an), wenn die Geschwindigkeit des Kraftfahrzeugs größer als eine vorgegebene Grenzgeschwindigkeit ist (v_vG)) und die übrigen Anschaltbedingungen (B1, B2) erfüllt sind.

## Claims

1. A method for controlling an automatic start-up process for a drive unit of a motor vehicle, the drive unit automatically being started (on), when all the predetermined start-up conditions (B1, B2, B3) are met (&) and a start-up condition (B3) being that no driver-absence may be recognised, **characterised in that** the drive unit is also automatically started (on) when driver-absence is recognised, if the speed of the motor vehicle is greater than a predetermined limit speed (v_vG) and the remaining start-up conditions (B1, B2) are met.

2. A method according to claim 1, **characterised in that** a driver-absence is recognised by evaluating a driver door contact signal and/or a driver belt buckle signal and/or a driver seat occupancy recognition signal and/or a foot pedal actuation signal and/or a camera signal.

3. A method according to claim 2, **characterised in that** in the event of a plurality of driver-absence recognition units, a driver-absence is recognised if at least a predetermined number of driver-absence recognition units have recognised a driver-absence.

4. A method according to any one of the preceding claims, **characterised in that** an automatic start-up of the drive unit can be prevented when the driver-absence is recognised.

5. A method according to claim 4, **characterised in that** an automatic start-up of the drive unit is prevented when the driver-absence is recognised if the driver actuates an operating element provided for this and/or if a car wash mode is recognised and/or a towing event is recognised and/or if a frictional engagement between the drive unit and the drive wheels is recognised.

6. A method according to claim 5, **characterised in that** the car wash mode is recognised by evaluating the individual wheel speeds.

7. A method according to claim 6, **characterised in that** the car wash mode is recognised by an evaluation of this type of the individual wheel speeds when a single wheel speed is determined in one wheel or in all the wheels, which are arranged one behind the other, which is zero or at least virtually zero, and the individual wheel speed of the remaining wheels is significantly different from zero.

8. A start-up control device (A) for controlling an automatic start-up process of a switched-off drive unit of a motor vehicle, the start-up control (A) initiating an automatic start-up process (on), when all the predetermined start-up conditions (B1, B2, B3) are met (&1), and a start-up condition (B3) consisting in that no driver-absence may be recognised, **characterised in that** the start-up control (A) also initiates an automatic start-up process (on) when driver-absence (I) is recognised, when the speed of the motor vehicle is greater than a predetermined limit speed (v_vG) and the remaining start-up conditions (B1, 82) are met.

## Revendications

1. Procédé de commande d'une opération de commutation automatique d'une unité d'entraînement d'un véhicule automobile selon lequel,
l'unité d'entraînement est commutée automatiquement si toutes les conditions de commutation (B1, B2, B3) sont remplies (&), et
une condition de commutation (B3) consiste à ne pas détecter d'absence de conducteur,
**caractérisé en ce que**
l'unité d'entraînement est démarrée automatiquement (an) même en cas de reconnaissance d'absence de conducteur si la vitesse du véhicule est supérieure à une vitesse limite prédéfinie (v_vG) et si les autres conditions de commutation (B1, B2) sont remplies.

2. Procédé selon la revendication 1,
**caractérisé en ce qu'**
on reconnaît une absence de conducteur par l'exploitation d'un signal de contact de portière côté conducteur et/ou d'un signal de fermeture de ceinture de sécurité du conducteur et/ou d'un signal de détection d'occupation de siège du conducteur et/ou d'un signal d'actionnement de la pédale de frein et/ou un signal de caméra.

3. Procédé selon la revendication 2,
**caractérisé en ce que**
plusieurs unités de reconnaissance d'absence de conducteur, estiment qu'un conducteur est absent si au moins un nombre prédéfini d'unités de reconnaissance d'absence de conducteur ont reconnu une absence de conducteur.

4. Procédé selon l'une des revendications précédentes,
**caractérisé en ce qu'**
on évite une commutation automatique de l'unité d'entraînement en cas d'absence de conducteur, reconnue.

5. Procédé selon la revendication 4
**caractérisé en ce qu'**
on évite une commutation automatique de l'unité d'entraînement en cas d'absence reconnue de conducteur si le conducteur a actionné un élément de manoeuvre prévu à cet effet et/ou si un mode de tunnel de lavage a été reconnu et/ou si le remorquage a été reconnu et/ou si une liaison par la force entre l'unité d'entraînement et les roues motrices a été reconnue.

6. Procédé selon la revendication 5,
**caractérisé en ce que**
le mode de tunnel de lavage est reconnu par l'exploitation des vitesses de rotation des différentes roues.

7. Procédé selon la revendication 6,
**caractérisé en ce que**
le mode de tunnel de lavage est reconnu par une exploitation des vitesses de rotation de roue, telle que si pour une roue ou pour toutes les roues l'une derrière l'autre, on a déterminé une vitesse de rotation d'une roue unique qui est nulle ou pratiquement nulle et si la vitesse de rotation d'une roue unique est significativement plus élevée que celle des autres roues.

8. Dispositif de commande de démarrage (A) pour commander une opération de commutation automatique d'une unité d'entraînement coupée d'un véhicule automobile selon lequel,
la commande de démarrage (A) lance une opération de commutation automatique si toutes les conditions de commutation prédéfinies (B1, B2, B3) sont remplies (&1), et
une condition de commutation (B3), est qu'il ne doit pas y avoir reconnaissance d'absence de conducteur,
**caractérisé en ce que**
la commande de démarrage (A) lance une opération de commutation automatique (an) même si l'absence de conducteur est reconnue (!) si la vitesse du véhicule est supérieure à une vitesse-limite prédéfinie (v_vG) et si les autres conditions de coupure (B 1, B2) sont remplies.
